Europäisches Patentamt

European Patent Office

Office européen des brevets

(19)

(11) Publication number: **0 160 429**

**A2**

(12) **EUROPEAN PATENT APPLICATION**

(21) Application number: **85302471.9**

(22) Date of filing: **09.04.85**

(51) Int. Cl.⁴: **F 16 F 9/08**
**F 16 F 9/43**

(30) Priority: **30.04.84 US 605582**
**30.04.84 US 605627**
**30.04.84 US 605628**

(43) Date of publication of application:
**06.11.85 Bulletin 85/45**

(84) Designated Contracting States:
**DE FR GB IT**

(71) Applicant: **GENERAL MOTORS CORPORATION**
**General Motors Building 3044 West Grand Boulevard**
**Detroit Michigan 48202(US)**

(72) Inventor: **Wicke, Brian Garfield**
**5074 Midmoor**
**Bloomfield Hills Michigan 48013(US)**

(72) Inventor: **Sell, Jeffrey Alan**
**10444 Kingston**
**Huntington Wood, MI 48070(US)**

(72) Inventor: **Capehart, Tenneille Weston**
**5097 Aintree Court**
**Rochester, MI 48063(US)**

(72) Inventor: **Richter, Roy**
**603 Spring Street**
**Ann Arbor, MI 48103(US)**

(72) Inventor: **Wight, Robert Derry**
**133 Haven Hill Road**
**Dayton, Ohio 45459(US)**

(72) Inventor: **Wokasien, Carlyle Harry**
**7312 Eagle Creek Drive**
**Dayton, Ohio 45459(US)**

(74) Representative: **Haines, Arthur Donald et al,**
**GM Patent Section Luton Office (F6) P.O. Box No. 3**
**Kimpton Road**
**Luton, Beds. LU2 0SY(GB)**

(54) Self pressurized shock-dampening device.

(57) A method of self-pressurizing a piston-and-rod type hydraulic shock-dampening device by means of an internally generated gas including the steps of positioning in the shock-dampening device a dormant gasifiable substance (32), placing a predetermined quantity of hydraulic fluid in the device, sealing the device, and then activating the dormant substance to form said gas so as to pressurise the device to a pressure of at least two atmospheres at room temperature. Several embodiments of the invention are disclosed.

Fig.4.

SELF-PRESSURIZED SHOCK-DAMPENING DEVICE

This invention relates to pressurized, hydraulic, shock-dampening devices (e.g., automobile shock absorbers or shock-dampening struts) and a method of pressurizing same.

Background of the Invention

A typical hydraulic shock-dampening device (hereafter referred to as a "damper") comprises essentially: a working cylinder filled with hydraulic fluid (hereafter referred to as "oil"); and a gas-charged reservoir adjacent the working cylinder which receives and dispenses oil from and to the working cylinder during compression and rebound strokes respectively of the damper. The working cylinder comprises a damping piston axially slidable within a close-fitting surrounding tube. The piston has appropriate passages therethrough and damping valves therein which control the flow of oil from one side of the piston to the other as it reciprocates within the tube. One end of the working cylinder is sealed shut and about the piston rod while the other end communicates with the reservoir to permit oil to shuttle back and forth between the working cylinder and the reservoir as required. The reservoir contains a pocket of cushioning gas which compresses during the compression stroke of the damper and expands during the rebound stroke of the damper in order to accommodate the otherwise incompressible oil flowing from and to the working cylinder. The expansion and compression of the gas cushion also accommodates the expansion and contraction of the hydraulic oil at various temperatures. In so-called "single tube" dampers, the reservoir is aligned axially with the working cylinder and is usually defined by a simple extension of the same tube that defines the working cylinder. In so-called "double tube" dampers, the working cylinder is surrounded by a radially spaced second tube (known as the reservoir tube) and the annular space therebetween becomes the reservoir.

It is known to physically separate the oil from the cushioning gas in the reservoir in order to prevent the gas from aerating and foaming the oil. In this regard, aeration of the oil with cushioning gas is the primary cause of a condition known as "lag" which is lost motion occurring in the damping piston due to the presence of compressible hydraulic fluid (i.e., the aerated oil) in the working cylinder. One manufacturer (i.e., of single tube dampers), positions a floating piston between the gas and the oil in the reservoir to isolate one from the other. Other manufacturers package the cushioning gas in a hermetically sealed, gas-filled bladder which is submerged in the oil in the reservoir. One such bladder-containing damper of the double-tube type is disclosed in US-A-3,024,875, (Stultz), which is specifically incorporated herein by reference. Generally speaking US-A-3,024,875 discloses a Freon-filled bladder made from thin nylon or Mylar sheets sealed together along their edges. Assemblywise, the bladder disclosed in US-A-3,024,875 is: filled with Freon gas at a pressure of approximately one atmosphere (i.e., at room temperature and with the rod extended); curled; and then inserted into the reservoir tube. Thereafter, the working cylinder is inserted into the centre of the curled bladder and oil poured to overflowing into both the cylinder and the reservoir. The cylinder and reservoir tubes are then capped and welded closed. The cap for the working cylinder includes appropriate passages and valving for communication with the surrounding reservoir. In more recent years sulphur hexafluoride ($SF_6$) gas has been used in place of Freon.

It is also known to pressurize the cushioning gas pocket to superatmospheric pressures ranging from about 2 to about 20 atmospheres. Pressurization helps to reduce lag due to reservoir gas-oil mixing (i.e., in bladderless dampers) and also reduces a condition known as "cavitational" lag which otherwise occurs in both bladder-type and bladderless dampers. Cavitational lag results from vaporization of the oil in the damper and subsequent aeration of the oil with the oil vapor. Superatmospheric pressurization not only reduces the amount of vapor that is formed but also so shrinks the size of the bubbles that are formed as to render them virtually harmless, lag-wise. Finally, superatmospheric pressurization imparts gas-spring characteristics to the damper which supplement the primary springs of the vehicle for improved control and handling of the vehicle.

A number of techniques for superatmospherically pressurizing dampers are known. One technique, for example, charges a single tube damper (i.e., with axially aligned reservoir and a floating oil-gas separating piston) by means of a special fixture sealingly secured to the open end of the tube defining the cylinder and reservoir. The fixture holds the floating and working pistons away from the mouth of the tube while the cushioning gas is pumped into the tube to a predetermined first pressure. Thereafter: (1) the floating and working pistons are pushed into the tube to compress the gas to a second predetermined working pressure; (2) the operating oil is pumped in behind the working piston; (3) the tube is sealed closed; and (4) the special fixture is removed. Another technique fully assembles a bladderless double-tube damper and then pressurizes it by: piercing the reservoir tube; injecting the cushioning gas under pressure into the reservoir; and finally welds shut the pierced hole. Still another technique (i.e., for bladder-type, double-tube dampers) provides a special sealable fitting through the wall of the reservoir tube and the bladder through which cushioning gas is pumped into the bladder from an external source after the damper has been filled and sealed (e.g., see US-A-3,945,663 (Duckett)).

The aforesaid pressurizing techniques are not only unnecessarily complicated and require special equipment but cannot be used effectively to pressurize bladder-type dampers such as those disclosed in US-A-3,024,875 (supra) where the bladder is completely submerged in the reservoir oil so as to be incommunicable with the outside of the damper. Moreover, existing practices for stuffing low pressure (i.e., atmospheric pressure) bladders into reservoirs prior to filling and sealing cannot be used with bladders which are distended by high prepressurization. This is especially true with bladder-type, double-tube dampers disclosed in US-A-3,024,875, where the bladder is curled to facilitate stuffing and positioning around the working cylinder. Even if it were practical to properly position highly prepressurized bladders in the reservoirs, special equipment would then be necessary to fill the dampers with pressurized oil and to seal them while still under pressure.

Accordingly, it is an object of the present invention to provide an ultrasimple method for manufacturing a high pressure, shock-dampening device wherein superatmospheric pressure cushioning gas is generated in situ after the device is assembled. It is a further object of the present invention to provide a superatmospheric pressure, bladder-type shock-dampening device wherein the bladder is completely submerged in the oil and incommunicable with the exterior of the device. This and other objects and advantages of the present invention will become more readily apparent from the detailed description thereof which follows.

Brief Description of the Invention

The present invention comprehends a unique method for the in situ, self-pressurization of a gas-charged hydraulic damper to superatmospheric pressures (i.e., at room temperature) and a device produced thereby. More specifically, the invention comprehends positioning a dormant gasifiable substance(s) in the reservoir of the damper (with or without a bladder) which substance, when activated, will undergo a chemical or physical change to generate a superatmospheric pressure of a noncondensible gas inside the damper after it has been filled and sealed shut. It is to be understood that the term "noncondensible" gas is not used herein in the absolute sense, but rather is used to mean a gas which will not condense under the normal operating conditions (i.e.,

temperature and pressure) of the damper. Preferably, the process and device will include a bladder to contain the pressurizing gas and its dormant activatable precursor. While the following discussion will be in terms of such a preferred device/process, it is to be understood that the invention extends to bladderless devices as well.

The substance(s) will remain dormant (i.e., in the liquid or solid state(s)) until after the device is filled with oil and sealed shut, and is thereafter activated by the application of external energy to the damper. In this regard, activation energy may be provided by heat, microwaves, ultrasonic vibration, shockwaves, or percussion, for example. Preferably, the dormant substance will be activated by heating the device following assembly. It is most preferred to employ such substances which are gasifiable at temperatures of about $60^{O}C$ to $66^{O}C$ ($140^{O}F$ to $150^{O}F$) which occur within the device during the normal painting and drying cycle of the damper. Other higher temperatures may, of course, be used depending on which gasifiable substance(s) is chosen for each application.

The dormant substance(s) may take many forms. For example, the gasifiable substance may be a sublimeable solid, like solidified carbon dioxide (dry ice), or sulphur hexafluoride ($SF_6$) or low boiling point liquids. Similarly, the gasifiable substance may be any of a number of well known heat-activated, decomposable material(s) such as the alkali metal azide propellants, or the chemical blowing agents (CBAs) commonly used to foam synthetic plastics materials. The former generate nitrogen, are well known as inflators for vehicular air bag systems, and may be blended with appropriate binders and/or diluents to control their rate of decomposition/gasification as well as their activation temperature. The latter (i.e., CBAs) are generally classified as either physical or chemical foaming agents. Chemical foaming agents undergo a chemical transformation when producing the gas while physical foaming agents undergo a reversible physical change-of-state e.g. vaporization. The physical foaming agents will preferably comprise encapsulated low boiling liquids (e.g., Freon). The chemical foaming agents will include such well known plastic foaming agents as are described in various publications (e.g., Modern Plastics Encyclopedia, 1982-83, McGraw Hill, pp 176-180). The gasifiable substance(s) may actually comprise two or more separate reactants (e.g., acetic acid ($CH_3COOH$) + sodium carbonate ($Na_2CO_3$) which interact to generate the pressurizing gas such as is described in one embodiment of the invention hereinafter. Such interacting reactants are separated from each other by a destructible (e.g., meltable) barrier which is later destroyed (e.g., by heat) to release the reactants and initiate the gas-generating reaction.

Physical-foaming-agent-type dormant gasifiable substances will preferably comprise low boiling liquids [e.g., trifluoromonochloromethane (i.e., Freon 13), or difluoromonochloromethane (Freon 22)] which have boiling points less than about $-40^{\circ}C$ at the operating pressure of the damper so that the pressurizing gas is the vapor phase of the liquid. These volatile liquids may be kept liquid by refrigeration or by appropriate pressurized containment before the damper is sealed shut. For example, a bladder containing the vaporizable liquid is refrigerated until immediately before its insertion into the damper. Alternatively, the volatile liquid is contained under pressure in a separate destructible package(s) (e.g., microcapsules) preplaced in the bladder before final assembly and sealing such as is described in another embodiment of the invention hereinafter. In this later regard, the destructible package(s) for the volatile liquid will preferably be a heat softenable material (e.g., hard or soft cellulose acetate, hard or soft cellulose acetate-butyrate or rigid polyvinylchloride-vinyl acetate) which will soften and finally burst from the internal pressure exerted by the vaporizing liquid as the damper is heated. In bladder-free dampers, the volatile liquid could be packaged in a material which will soften or dissolve in the hydraulic fluid (especially at elevated temperatures) to release the volatile liquid after the damper is filled and sealed.

The bladder defining the cushioning gas pocket will contain enough of the dormant gasifiable substance to generate at least about 0.08 moles of substantially noncondensible gas per litre of bladder volume (i.e., at room temperature) so as to raise the room temperature pressure in the bladder to at least about 2 atmospheres and upwards to as much as about 10 atmospheres. For example, in its unpressurized state the bladder can be inserted into the damper in exactly the same manner as before. By the simple application of heat, the damper is pressurized and all without recourse to superfluous external pressurizing means, fixtures, and fittings. The resulting product has its bladder immersed completely in the reservoir oil and is completely incommunicable with the exterior of the damper.

The invention and how it may be performed are hereinafter particularly described with reference to the accompanying drawings, in which:

Figure 1 depicts, in partial section, a prior art, bladder-type, double-tube shock absorber with its working piston near the end of its compression stroke;

Figure 2 depicts the shock absorber of Figure 1 with its working piston near the end of its rebound stroke;

Figure 3 is a section taken in the direction 3-3 of Figure 2;

Figure 4 is a partial view of a shock absorber like that shown in Figure 2 depicting one embodiment of the present invention;

Figure 5 is a partial view of a shock absorber like that shown in Figure 2, depicting a second embodiment of the present invention;

Figure 6 is an enlarged longitudinal sectional view of the pressurizing capsule 32' of Figure 5; and

Figure 7 is an enlarged longitudinal sectional view of another pressurizing capsule embodiment; and

Figure 8 is a partial view of a shock absorber like that shown in Figure 2, depicting a third embodiment of the present invention.

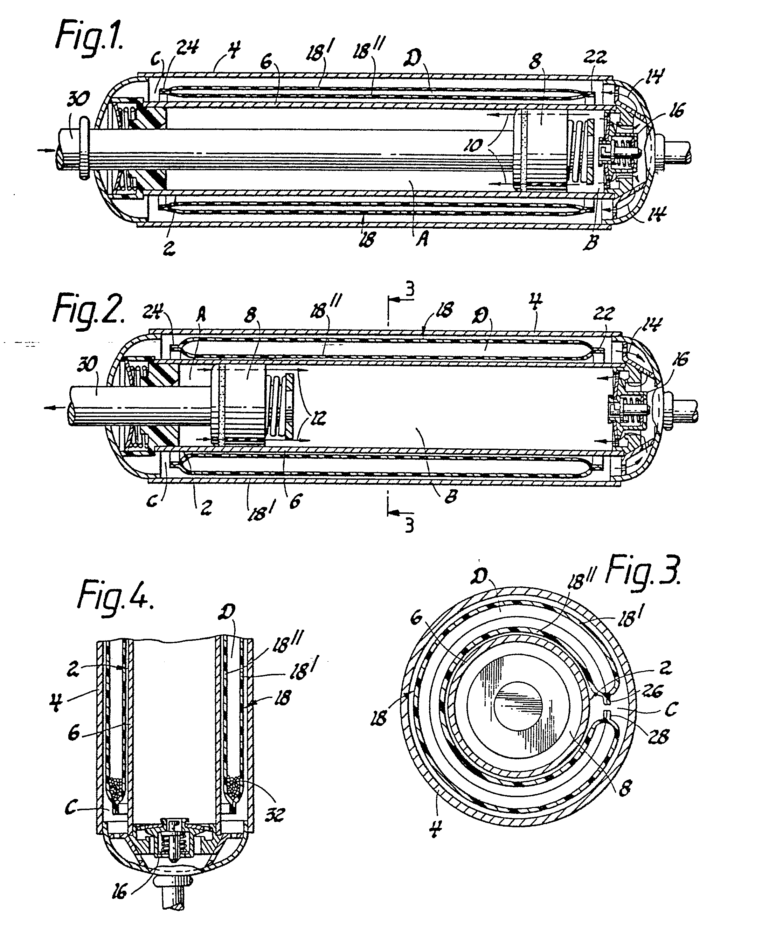

Figures 1-3 depict a simple, bladder-type, double-tube shock absorber comprising essentially of a working cylinder 2, a surrounding reservoir tube 4 and an annular reservoir chamber C therebetween, and will serve to illustrate the basic structure and operation of gas-filled hydraulic dampers in general. The working cylinder 2 comprises a tube 6 defining working chambers A and B which are separated one from the other by a damping piston 8. Damping piston 8 contains appropriate internal passages and damping valves (not shown) for controlling the flow of hydraulic oil between chambers A and B as indicated by the arrows 10 and 12. In Figure 1 the working piston 8 is shown near the end of its compression stroke and the arrows 10 show the oil flowing from the compression control chamber B through the piston 8 into the rebound control chamber A. Any excess oil in the compression control chamber B is forced into the reservoir chamber C (see arrows 14) via an appropriate valving arrangement 16 at the end of the working cylinder 2. The reservoir chamber C contains a substantially atmospherically-pressurized bladder 18 which defines a cushioning gas pocket D such as is described in US-A-3,024,875 supra. During the compression stroke the gas cushion D is compressed to accommodate the oil flowing into the reservoir C from the cylinder 2. The bladder 18, here depicted, comprises simply two sheets of gas-impermeable plastics 18' and 18'' which are heat sealed together along their edges 22, 24, 26 and 28. During assembly, the bladder is curled to fit inside the reservoir tube 4 and the working cylinder 2 thereafter inserted into the centre of the curled bladder 18. The working cylinder and reservoir C are then completely filled with oil so that the atmospherically-pressurized bladder 18 is totally immersed within the hydraulic fluid in the reservoir C and has no means for communicating with the outside of the shock absorber (i.e., incommunicable with the ambient).

Figure 2 shows the shock absorber of Figure 1 near the end of its rebound stroke wherein the rod 30 attached to the piston 8 is in substantially its fully extended position. As the piston 8 moves through its rebound stroke, oil from the rebound chamber A flows through the piston 8 into the compression chamber B as indicated by the arrows 12. At the same time, the excess hydraulic oil earlier dumped into the reservoir C during compression is now returned to the compression chamber B via the valving arrangement 16 due to the force exerted by expansion of the gas in the cushioning gas pocket D earlier compressed in the compression stroke.

Figure 4 illustrates a damper of similar construction to that shown in Figures 1-3, which is provided with a superatmospherically-self-pressurizable bladder in accordance with one embodiment of the present invention. The shock absorber is assembled in substantially the same manner as dampers having atmospherically-pressurized bladders but wherein the bladder 18 also contains pellets 32 of a dormant gasifiable substance which, after sealing of the tubes 2 and 4, is activated (e.g., by heat) to gasify and pressurize the bladder 18 to a desired superatmospheric pressure between about 2 and 10 atmospheres (at room temperature). Alternatively a single larger pill of gasifiable substance may be substituted for the pellets.

In one specific example of the process, a double tube shock absorber was chemically self-pressurized as follows. A shock absorber of the type shown essentially in US-A-3,024,875 supra was made according to the standard commercial practice of the applicants but the sulphur hexafluoride ($SF_6$)-filled nylon bladder was replaced with an air-filled nylon bladder (i.e., at a pressure of one atmosphere at room temperature) containing three propellant pills supplied by Inflation Systems International Co. Each pill had a diameter of about 13 mm, a thickness of about 5.5 mm and weighed one gram (including about 40% alkali metal azide, and the remainder binder/diluents). The bag had a volume of about 75cc at room temperature and atmospheric pressure, and the shock absorber was filled to overflowing with about 185cc of hydraulic fluid before sealing. With its rod fully extended, the shock absorber was placed in an oven at $149^O$C ($300^O$F) for three hours and then allowed to cool back down to room temperature. The shock absorber was then tested by loading the rod sufficiently to push the rod completely into the working cylinder so as to compress the nitrogen ($N_2$) gas generated in the reservoir by the azide decomposition. This test showed that the decomposition of the azide had pressurized the shock absorber to 206.84 kPa (30 psi).

In another example of the process, the reservoir tube of the shock absorber described in the first example was fitted with a pressure gauge and the bladder charged with five grams each of ammonium carbonate and copper sulphate (for gettering ammonia ($NH_3$)). The shock absorber was heated for five (5) hours in an oven at 93°C (200°F). At that time the gauge showed a pressure of 1585.8 kPa (230 psi). The shock absorber was then cooled to room temperature and exhibited a rod-extended pressure of 723.95 kPa (105 psi) and a rod-retracted pressure of 1241.06 kPa (180 psi).

A second embodiment of the present invention comprehends a method for the _in situ_, self-pressurization of a gas-charged hydraulic damper by: positioning a gasifiable substance and a reagent reactive therewith in the gas pocket of the damper (i.e., with or without a bladder); positioning a temporary barrier between the substance and the reagent to temporarily isolate one from the other; and, subsequently, removing the barrier so as to combine the substance and reagent for generating superatmospherically pressurized gas in the gas pocket after the damper has been filled and sealed shut. The process is useful with virtually any substance-reagent couple capable of irreversibly generating sufficient gas to pressurize the damper. Hence a variety of reaction couples such as (1) $CH_3COOH + Na_2CO_3 = CO_2$, (2) $Ca_3N_2 + H_2O = NH_3$, (3) $Al_4C_3 + H_2O = CH_4$, (4) $Na_2O_2 + H_2O = O_2$, and (5) $HCl + Zn = H_2$, are all potentially useful in the process of the present invention.

The temporary barrier separating the components may be removed by displacement (e.g., unplugging) or destruction (e.g., rupturing, dissolving, melting, etc). Preferably the barrier is melted and hence will comprise a readily fusible material such as wax or low melting plastics. The components may be packaged with the barrier in a variety of ways. For example, one component may be contained in a pouch or ampule, formed from the barrier material and immersed in the other component. Preferably, however, both components are packaged together in a single capsule, with only a thin plug or membrane of the barrier material separating them from each other. In a most preferred embodiment, the capsule will comprise a tubular centre portion filled with one of the components and sealed off at both ends with a low melting barrier material. Perforated caps, filled with the other component, are positioned on both ends of the tube. The capsule will preferably be standardized as to size in that each capsule will generate the same amount of gas so that one or more of the capsules may be used, as required, depending on the size of the damper and the pressure sought to be obtained therein. In this regard, enough of the components are provided in the gas pocket of the reservoir to raise the room temperature pressure in the pocket to at least about 2 atmospheres and upwards to as much as about 10 atmospheres.

After assembly and sealing, the barrier is removed (e.g., the damper is heated sufficiently to melt the barrier) to permit the components to flow together, react and pressurize the gas pocket.

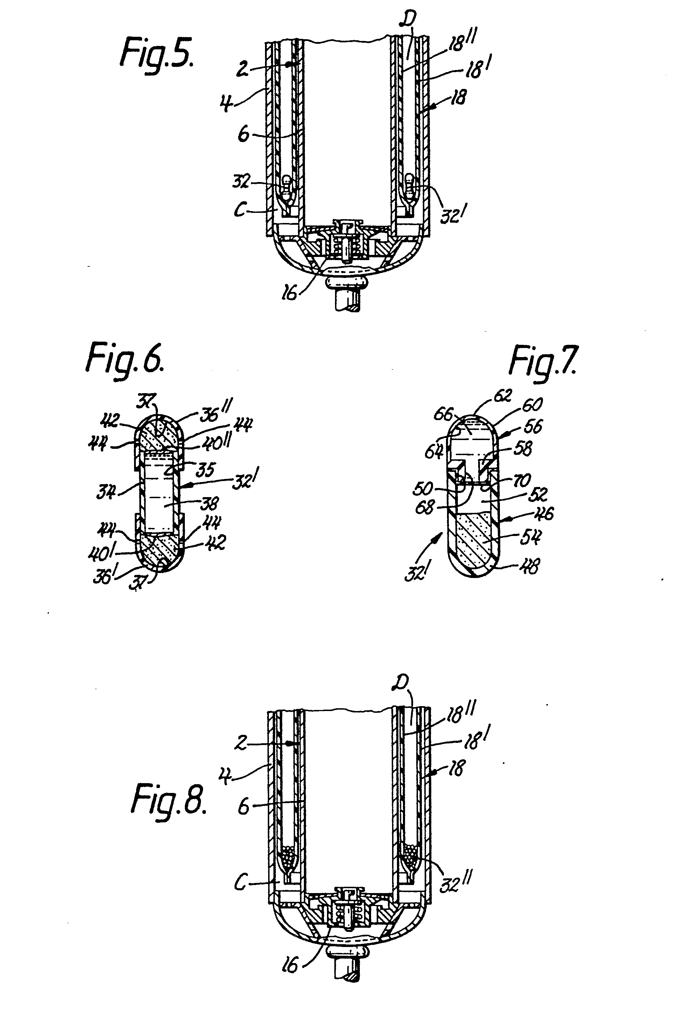

Figure 5 illustrates a damper of similar construction to that shown in Figures 1-3, which damper is provided with a superatmospherically-self-pressurizable bladder in accordance with this second embodiment of the present invention. The shock absorber is assembled in substantially the same manner as dampers having atmospherically-pressurized bladders but wherein the bladder 18 also contains a plurality of pressurizing capsules 32', each containing a gasifiable substance and a reagent reactive with the substance to generate the pressuring gas. Alternatively, a single larger capsule may be substituted for the many smaller ones. The use of many small standarized capsules, however, is preferred as it permits shock absorbers to be made with many different pressures and/or many different gas-pocket sizes by merely adjusting the number of standard-sized capsules used for each individualized application.

Figure 6 shows a pressurizing capsule 32' comprising a tubular centre portion 34 and two perforated end caps 36' and 36" therefor. The tubular portion 34 defines a first chamber 35 filled with one of the reactants 38 and sealed at both ends by wax plugs 40' and 40". The end caps 36'-36" each define a second chamber 37 filled with the other of the reactants 42. Heating of the damper causes the wax plugs 40 to melt thereby bringing the reactants 38 and 42 together to generate the pressurizing gas. The gas so generated exits the capsule 32 via a plurality of small openings 44 in the end caps 36.

Figure 7 shows another embodiment of the pressurizing capsule 32' comprising a rigid tubular portion 46 having a closed one end 48 and an open mouth 50 at the other end. The tubular portion 46 defines a first chamber 52 filled with one of the reactants 54. An elastomeric plug 56 closes off the mouth 50 of the tubular portion 46. The plug 56 comprises an annular neck portion 58 tightly engaging the mouth 50 and a bulbous portion 60 comprising a thin elastomeric wall

0160429

62 defining a second chamber 64 filled with the other
of the reactants 66.   The neck portion 58 defines an
opening 68 extending between the first chamber 52 and
the second chamber 64 for passing reactant 66
therethrough and into chamber 52.   A thin rupturable
membrane 70 (e.g., a plastics film) extends across the
opening 68 and is held in place between the neck 58 and
the mouth 50 of tube 46.   The damper is assembled and
filled with hydraulic oil with the rod fully extended.
After sealing, the rod is pushed into the damper
thereby increasing the pressure in the reservoir which
in turn compresses the bulbous portion 60 (much like an
eyedropper) and displaces the liquid reactant 66
through the opening 68 so as to rupture the membrane 70
and enter the reaction chamber 52.   Alternatively, the
thin membrane 70 may be replaced with a small plug (not
shown) which fits snugly within the opening 68 under
ordinary pressure conditions but which is blown out of
the opening 68 into the reaction chamber 52 when the
piston rod is pushed into the damper.   The gas
generated exits the capsule 32 by blowing off the plug
56 or rupturing the wall 62 by the internal pressure
generated by the gas.   Alternatively, small plugged
holes may be provided in the tube 46.   The plugs are
sufficient to seal off the inside of the tube during
compression of the bulb 60 but will blow out as the
internal pressure builds.

          In one example of the process according to
this second embodiment, a double tube shock absorber of
the type shown essentially in Figures 1-3 is
self-pressurized to about 10 atmospheres as follows.
The shock absorber is assembled with a 25cc air-filled Saran bladder (i.e., at a pressure of one atmosphere at room temperature) containing a pressurizing capsule comprising a Teflon centre tube and two end caps essentially as shown in Figure 5. The tube is filled with 2cc of concentrated acetic acid and plugged at both ends with ULTRAFLUX (R.T.M.) Plastic Wax (m.p. 66°C (150°F) manufactured by the Bareco Division of the Petrolite Corporation. The end caps contain about 2 grams of sodium carbonate ($Na_2CO_3$). After filling with hydraulic fluid and sealing shut, the damper is heated in an oven sufficiently to elevate the temperature inside the bladder to above the melting point of the wax plugs (ca.66°C (150°F)) and held thereat sufficiently long for the plugs to melt and the acid to react with the carbonate to pressurize the bladder to about 10 atmospheres with carbon dioxide ($CO_2$).

A third embodiment of the present invention comprehends a method for the _in situ_, self-pressurization of a gas-charged hydraulic damper by: positioning in the reservoir of the damper (i.e., with or without a bladder) a volatile substance which is a condensed phase (i.e., solid or liquid) of the charging gas and which is contained under pressure in a rupturable capsule(s); and, subsequently rupturing the containment capsule(s) to remove the containment pressure, liberate the volatile substance for vaporization and superatmospherically-pressurize the reservoir with its vapor after the damper has been filled and sealed shut. The volatile substance has a boiling point which is below the lowest anticipated operating temperature of the damper so as to be substantially noncondensible in service. In this regard, the term "boiling point" is used herein to mean the temperature at which the vapor pressure of the volatile substance is slightly greater than the total pressure in the reservoir, and hence will include the sublimation temperature of substances which vaporize directly from the solid state without an intermediate liquid transition phase.

The volatile substance may be sublimable solids such as solidified carbon dioxide (dry ice) or solidified sulphur hexafluoride ($SF_6$) or liquids such as the fluorinated hydrocarbon (i.e., Freons) refrigerants or similar liquids. The substances will preferably comprise larger molecule materials which have boiling points below about $-40^{\circ}C$. In this regard, the larger molecules are easier to contain in bladders otherwise permeable to smaller molecules. Particularly preferred fluorinated hydrocarbons for higher pressure applications include trifluoromonochloromethane (Freon 13), difluoromonochloromethane (Freon 22), and monobromotrifluoromethane (Freon 13 Bl). Trichloromonofluoromethane (Freon 11), dichlorodifluoromethane (Freon 12), and dichlorotetrafluoroethane (Freon 114) are acceptable for the lower pressure (i.e., below about 482.63 kPa (70 psi)) applications.

Enough volatile substance is provided in the capsule to fill the gas pocket of the reservoir with at least about 0.08 mole of vapor per litre of pocket volume (i.e., measured at room temperature) so as to raise the room temperature pressure in the pocket to at least about 2 atmospheres and upwards to as much as about 10 atmospheres.

The volatile substance is contained under pressure in a separate capsule(s) (e.g., microcapsules) which is/are subsequently ruptured to remove condensing pressure and liberate the substance for vaporization and consequent pressurization of the gas pocket of the reservoir. While any frangible capsule could be used which could be ruptured by increased internal pressure or mechanical action (e.g., high frequency vibration), the capsule(s) will preferably comprise materials which first soften and then rupture within the damper. Heat-softenable materials such as hard or soft cellulose acetate, hard or soft cellulose acetate-butyrate, and rigid polyvinylchloride-vinyl acetate are most preferred. Such materials will soften when the damper is heated. At the same time the vapor pressure exerted by the contained substance increases the pressure within the capsule. The damper is then heated sufficiently (i.e., in terms of time and temperature) to so soften the capsule and elevate the vapor pressure of the substance contained therein to the point where the capsule bursts resulting in complete vaporization of the substance and pressurization of the gas pocket. Heat-softenable capsules are effective for use with both bladder-type and bladder-free dampers. In bladder-free dampers where the gas pocket is in direct contact with the hydraulic fluid, the capsule could be softened by the solvent-plasticizing action of the hydraulic fluid (especially at elevated temperatures). In this regard, cellulose acetate-butyrate or PVC-vinyl acetate capsules have poor chemical resistance to hydraulic fluids containing aromatic hydrocarbons.

Figure 8 illustrates a damper of similar construction to that shown in Figures 1-3, which damper is provided with a superatmospherically-self-pressurizable bladder in accordance with the third embodiment of the present invention. The shock absorber is assembled in substantially the same manner as dampers having atmospherically-pressurized bladders but wherein the bladder 18 also contains a plurality of heat-softenable capsules 32" (e.g., microcapsules) each containing a highly volatile substance (e.g., sulphur hexafluoride ($SF_6$)) under pressure which, when freed from its containing capsule, vaporizes to fill the bladder 18 and pressurize the shock absorber. Alternatively, fewer larger capsules may be substituted for the many smaller ones. Indeed even a single much larger capsule is acceptable. The use of many small standarized capsules, however, is preferred as it permits shock absorbers to be made with many different pressures and/or many different gas-pocket sizes by merely adjusting the number of standard-sized capsules used for each individualized application.

In one example of the process according to this third embodiment, a double tube shock absorber of the type shown essentially in Figures 1-3 is self-pressurised to about 10 atmospheres as follows. The shock absorber is assembled with a 25cc air-filled nylon bladder (i.e., at a pressure of one atmosphere at room temperature) containing a spherical, Freon-filled, rigid PVC/vinyl acetate capsule. The capsule has an inside diameter of about 6mm, a wall thickness of about 0.18mm and contains lcc (0.9 gram) of liquid difluoromonochloromethane (Freon-22). After filling with hydraulic fluid and sealing shut, the device is heated in an oven sufficiently long enough to elevate the temperature inside the bladder to about 93$^\circ$C (200$^\circ$F) and held thereat sufficiently long enough to burst the capsule from within and thereby liberate the Freon.  Comparable dampers may be similarly self-pressurized with 1.5 grams of sulphur hexafluoride (SF$_6$) or monobromotrifluoromethane (Freon R13 B1) contained in a soft cellulose acetate capsule having a wall thickness of about 0.36mm or a soft cellulose acetate/butyrate capsule having a wall thickness of about 0.42mm.  In the aforesaid examples, capsule wall thicknesses have been selected to provide approximately 1378.95 kPa (200 psi) room temperature burst strength but may vary considerably depending on the handling and storage stability sought for the filled capsules before use.

While the invention has been described primarily in terms of a bladder-type, double-tube shock absorber, it is to be understood that the principals involved therein are equally applicable to pressurized dampers of the bladder-free (with or without a free-floating piston between the reservoir oil and the gas pocket) and single-tube type as well.  Hence the invention is not limited to the specific embodiments described herein but rather only to the extent set forth hereafter in the claims which follow.

Claims:

1. A method of assembling a pressurized shock-dampening device having a piston (8) and rod (30) assembly reciprocable within an hydraulic-fluid-filled working cylinder (2), a reservoir (C) adjacent said cylinder (2) for receiving and dispensing said fluid from and to said cylinder in service and a gas-filled region (D) in said reservoir (C) for exerting pressure on said fluid in said cylinder (2) during the operation of the device, characterised in that the method comprises the steps of: positioning a dormant gasifiable substance (32;42;54) in said reservoir (C) for generating a substantially non-condensible gas in said region (D); substantially filling said cylinder (2) and said reservoir (C) with an amount of said hydraulic fluid which is less than the total volume of said device so as to provide said region; sealing said device to contain said fluid therein; and thereafter activating said dormant substance (32;42;54) to form said non-condensible gas and pressurize said device to a pressure of at least two atmospheres at room temperature.

2. A method of assembling a pressurized shock-dampening device according to claim 1, in which the device is a double-tube shock-dampening device having a central working cylinder (2), and a reservoir tube (4) surrounding said working cylinder (2) in radially-spaced relation thereto so as to define therebetween an annular reservoir (C) for receiving and dispensing hydraulic fluid from and to the cylinder (2) in the operation of the device, characterised in that the method comprises the steps of: inserting an hermetically-sealed, gas-filled bladder (18) in said reservoir tube (4), said bladder containing said dormant gasifiable substance (32) for generating substantially non-condensible gas in said bladder (18); inserting said cylinder (2) in said reservoir tube (4); substantially filling said cylinder (2) and said reservoir (C) with said hydraulic fluid; sealing said cylinder (2) and said tube (4) to contain said fluid in the device; and thereafter heating said device to gasify said substance (32) and pressurize said bladder (18) to a pressure of at least two atmospheres at room temperature.

3. A method of assembling a pressurized shock-dampening device according to claim 1, in which the device is a double-tube shock-dampening device having a central working cylinder (2) and a reservoir tube (4) surrounding said working cylinder (2) in radially-spaced relation thereto, said cylinder (2) and tube (4) defining therebetween said reservoir (C) for receiving and dispensing hydraulic fluid from and to the cylinder (2) during the compression and rebound cycling of said device respectively and a gas-filled compression region (D) for accommodating excess fluid displaced from said cylinder (2) during said cycling, characterised in that the method includes the steps of: positioning dormant chemical pressurizing means (32';32") between said cylinder (2) and said tube (4), said pressurizing means comprising said dormant substance (42;54) for generating a substantially non-condensible gas in said compression region (D), and substantially filling said cylinder (2) and said reservoir (C) with said hydraulic fluid while said means (32';32") remains dormant.

4. A method of assembling a pressurized shock-dampening device according to claim 1, characterised in that the method includes the steps of: positioning an hermetically-sealed, gas-filled bladder (18) in said reservoir (C) about said cylinder (2), said bladder (18) containing said dormant gasifiable substrate (32;42;54) for generating substantially non-condensible gas in said bladder (18); and thereafter activating said dormant substance (32;42;54) to form said condensible gas and pressurize said bladder (18) to a pressure of at least two atmospheres at room temperature.

5. A method of assembling a pressurized shock-dampening device according to claim 1, characterised in that said dormant substance (42;54) is activated by: positioning a temporary barrier (40',40";70) between said substance (42;54) and a reagent (38;66) reactive with said substance (42;54) to generate said gas; and removing said barrier (40',40";70) in such a manner as to permit said substance (42;54) and said reagent (38;66) to flow together and react with one another.

6. A method of assembling a pressurized shock-dampening device according to claim 1, characterised in that said dormant substance (42) is activated by: positioning a destructible barrier (40',40") between said substance (42) and a reagent (38) reactive with said substance (42) to generate said gas; and destroying said barrier (40',40") in such a manner as to permit said substance (42) and said reagent (38) to flow together and react with one another.

7. A method of assembling a pressurized shock-dampening device according to claim 1, <u>characterised in that</u> said dormant substance (42) is activated by: positioning a fusible barrier (40',40") between said substance (42) and a reagent (38) reactive with said substance (42) to generate said gas; and heating said device sufficiently to fuse said barrier 40',40") and permit said substance (42) and reagent (38) to flow together and react with one another.

8. A method of assembling a pressurized shock-dampening device according to claim 1, <u>characterised in that</u> the method includes positioning a pressurizing capsule (46) in said reservoir (C), said capsule (46) having a first chamber (52) containing said dormant substance (54), a second chamber (64) containing a reagent (66) reactive with said substance (54) to generate said gas, and a temporary barrier (70) between said chambers (52,64) for separating said substance (54) from said reagent (66); and removing said barrier in such a manner as to open said chambers (52,64) one to the other and permit the contents thereof to flow together and react.

9. A method of assembling a pressurized shock-dampening device according to claim 1, <u>characterised in that</u> said dormant substance (32) comprises a volatile condensed phase of said gas which is contained under pressure within a rupturable capsule (32"); and said method includes rupturing said capsule (32") to generate said gas.

10. A method of assembling a pressurized shock-dampening device according to claim 1, <u>characterised in that</u> said dormant substance (32) comprises a volatile condensed phase of said gas which is contained under pressure within a softenable capsule (32"); and the method includes softening said capsule (32") in such a manner that the vapor pressure exerted by said substance (32) ruptures said capsule (32") thereby liberating said substance (32) to pressurize said region (D) with its vapor.

11. A method of assembling a pressurized shock-dampening device according to claim 1, characterised in that said dormant substance (32) comprises a volatile condensed phase of said gas which is contained under pressure within a heat-softenable capsule (32"); and the method includes heating said device to so soften said capsule (32") and increase the vapor pressure of said substance (32) as to rupture said capsule (32"), liberate said substance (32) and pressurize said region (D) with its vapor.

12. A method of assembling a pressurized shock-dampening device according to any one of claims 9, 10 or 11, characterised in that said dormant substance is selected from the group consisting of sulphur hexafluoride and fluorocarbons having a boiling point less than $-40^{\circ}C$.

13. A gas-filled, hydraulic, shock-dampening device having a hydraulic-fluid-filled working cylinder (2), a piston (8) and rod (30) assembly in said working cylinder (2) reciprocable between a compression position and a rebound position, a reservoir (C) adjacent said cylinder (2) for receiving and dispensing said fluid from and to said cylinder (2) as said device cycles and a gas-filled cushioning region (D) in said reservoir (C) for continually exerting pressure on said fluid in said cylinder (2), <u>characterised in that</u> said cushioning region (D) is defined by a bladder (18) which is incommunicable with the exterior of the device and which is self-pressurized to a pressure of at least two atmospheres at room temperature.

14. A gas-filled, hydraulic, shock-dampening device according to claim 13, <u>characterised in that</u> said bladder (18) is superatmospherically pressurized by gas generated <u>in situ</u>.

15. A gas-filled, hydraulic, shock-dampening device according to claim 13, <u>characterised in that</u> said bladder (18) is superatmospherically pressurized by the <u>in situ</u> vaporization of a liquid precursor of said gas having a boiling point less than $-40^{\circ}C$.

16. A gas-filled, hydraulic, shock-dampening device according to claim 13, <u>characterised in that</u> said bladder (18) is superatmospherically pressurized by the <u>in situ</u> decomposition of a solid propellant.

Fig.1.

Fig.2.

Fig.4.

Fig.3.

Fig.5.

Fig.6.

Fig.7.

Fig.8.